# EUROPÄISCHE PATENTANMELDUNG

(11) **EP 1 394 193 A1**
(43) Veröffentlichungstag der Anmeldung: **03.03.2004**
(21) Anmeldenummer: 03016401.6
(22) Anmeldetag: 21.07.2003
(51) Int. Cl.: C08J 3/12, C08K 5/103, C04B 24/26, C08J 3/05

(54) **Redispergierbare Dispersionspulver-Zusammensetzung, Verfahren zu deren Herstellung, sowie deren Verwendung**

(30) Priorität: 28.08.2002 DE 10239441
(71) Anmelder: Celanese Emulsions GmbH, 61476 Kronberg/Ts. (DE)
(72) Erfinder: Klein, Heinz-Peter, Dr., 55130 Mainz (DE); Geissler, Ulrich, Dr., 65239 Hochheim am Main (DE); Schottler, Michael, Dr., 65474 Bischofsheim (DE); Schmitz, Ludwig, Dr., 68642 Bürstadt (DE)
(74) Vertreter: Ackermann, Joachim, Dr.

(57) **Zusammenfassung**

Eine Dispersionspulver-Zusammensetzung auf Basis von wasserunlöslichen Polymerisaten mit besonders niedriger Wasseraufnahme enthält, bezogen auf die Gesamtmasse des Polymerisats, eine Menge im Bereich von 0,1 bis 30 Gew.-% mindestens eines Carbonsäureesters, dessen Säurekomponente mindestens 6 C-Atome besitzt und dessen Alkoholkomponente eine Polyhydroxyverbindung ist, vorzugsweise Glycerin, Diglycerin oder Triglycerin. Diese wird hergestellt, indem man durch Mischen von Polymerisat und Schutzkolloid mit dem Carbonsäureester eine Dispersion herstellt und diese anschließend gegebenenfalls unter gleichzeitigem Zumischen eines Antibackmittels trocknet, und lässt sich gut zur Modifizierung von Tapetenkleister, Mörtel oder Beton verwenden.

## Beschreibung

Die vorliegende Erfindung betrifft eine in Wasser redispergierbare Dispersionspulver-Zusammensetzung auf der Basis von wasserunlöslichen Polymeren. Die Erfindung betrifft auch ein Verfahren zu deren Herstellung und ihre Verwendung.

In Wasser redispergierbare Dispersionspulver-Zusammensetzungen auf der Basis von Homo- und Copolymerisaten sind bekannt. Die Herstellung derartiger Dispersionspulver-Zusammensetzungen erfolgt durch Sprühtrocknung der entsprechenden wässrigen Kunststoffdispersionen in einem heißen Luftstrom. Die Dispersionspulver eignen sich als Zusatzstoffe für hydraulische Bindemittel in der Baustoffindustrie. Des weiteren werden derartige Produkte als Binder in Beschichtungsmitteln oder Klebemitteln eingesetzt.

DE-A 100 49 127 beschreibt in Wasser redispergierbare Dispersionspulver auf der Basis eines filmbildenden, wasserunlöslichen Polymerisats aus der Gruppe der Vinylester, Vinylester/Ethylen-, Vinylchlorid-, (Meth)acrylat-, Styrol/(Meth)acrylat-Homo- und/oder Copolymerisate, welche mindestens einen Carbonsäureester, dessen Alkoholkomponente aus der Gruppe der Polyhydroxyverbindungen stammt, als Hydrophobierungsmittel enthalten. Als besonders geeignetes Hydrophobierungsmittel aus der Gruppe der dort erwähnten Carbonsäureester ist in den Ausführungsbeispielen Laurinsäuresorbitanester (Sorbitanmonolaurat) genannt. Die Herstellung der Dispersionspulver erfolgt durch Sprühtrocknung der wässrigen Gemische von wässrigen Dispersionen der genannten Polymerisate, denen vor dem Versprühen das Hydrophobierungsmittel zugesetzt wurde. Die so hergestellten Dispersionspulver weisen aber trotz Hydrophbierung durch das Additiv immer noch eine relativ hohe Wasseraufnahme auf und sind daher weiter verbesserungswürdig.

Der vorliegenden Erfindung lag daher die Aufgabe zugrunde, neue Hydrophobierungsmittel zu finden, mit denen sich die Wasseraufnahme von in Wasser redispergierbaren Dispersionspulvern auf der Basis filmbildender, wasserunlöslicher Polymerisate weiter reduzieren lässt.

Überraschend wurde gefunden, dass sich Carbonsäureester, deren Alkoholkomponente aus der Gruppe der Polyhydroxyverbindungen stammt, insbesondere Ester des Glycerins, Diglycerins, bzw. Triglycerins, mit Carbonsäuren mit mindestens 6 C-Atomen, zur Herstellung von hydrophoben Baustoffmassen eignen, die sich durch eine deutlich niedrigere Wasseraufnahme auszeichnen, verglichen mit Dispersionspulvern enthaltend Laurinsäuresorbitanester als Hydrophobierungsmittel.

Gegenstand der vorliegenden Erfindung ist somit eine in Wasser redispergierbare Dispersionspulver-Zusammensetzung auf der Basis von wasserunlöslichem Polymerisat der eingangs genannten Gattung, deren Kennzeichenmerkmal darin zu sehen ist, dass sie, bezogen auf die Gesamtmasse des Polymerisats, eine Menge im Bereich von 0,1 bis 30 Gew.-% mindestens eines Carbonsäureesters enthält, dessen Säurekomponente mindestens 6 C-Atome besitzt und dessen Alkoholkomponente eine Polyhydroxyverbindung ist, vorzugsweise Glycerin, Diglycerin oder Triglycerin.

Bevorzugt ist eine Dispersionspulver-Zusammensetzung, enthaltend
a) mindestens ein wasserunlösliches Polymerisats aus der Gruppe der Vinylester-, Vinylester/Ethylen-, Vinylchlorid, (Meth)acrylat-, Styrol/(Meth)acrylat-Homo- und Copolymerisate;
b) 3 bis 35 Gew.-%, vorzugsweise 3 bis 15 Gew.-%, bezogen auf die Gesamtmasse des Polymerisats, eines Schutzkolloids;
c) 0,1 bis 30 Gew.-%, vorzugsweise 0,5 bis 10 Gew.-%, bezogen auf die Gesamtmasse des Polymerisats, mindestens eines Carbonsäureesters, dessen Säurekomponente mindestens 6 C-Atome besitzt und dessen Alkoholkompenente Glycerin, Diglycerin oder Triglycerins ist und der zwischen der Carbonsäure- und Alkoholkomponente zwischen 0 und 80 Polyethylenoxideinheiten enthält;
d) 0 bis 30 Gew.-%, vorzugsweise 1 bis 20 Gew.-%, bezogen auf die Gesamtmasse des Polymerisats, Antibackmittel.

Als wasserunlösliche Polymerisate eignen sich Homo- und Copolymere, die in Form einer wässrigen Dispersion vorliegen oder die sich in eine wässrige Dispersion überführen lassen und welche, gegebenenfalls bei erhöhter Temperatur und/oder im alkalischen Medium, nach dem Auftrocknen und gegebenenfalls Aushärten einen festen Film bilden. Die mittlere Korngröße des Pulvers beträgt 1 bis 1000 µm, vorzugsweise 10 bis 700 µm, besonders bevorzugt 50 bis 500 µm.

Bevorzugte wasserunlösliche Polymerisate sind:
- Vinylester-Homo- und -Copolymerisate enthaltend eine oder mehrerer Monomereinheiten aus der Gruppe der Vinylester von unverzweigten oder verzweigten Alkylcarbonsäuren mit 1 bis 15 C-Atomen;
- Vinylester-Homo- und -Copolymerisate enthaltend eine oder mehrere Monomereinheiten aus der Gruppe der Vinylester von unverzweigten oder verzweigten Alkylcarbonsäuren mit 1 bis 15 C-Atomen und Ethen;
- Vinylester-Homo- und -Copolymerisate enthaltend eine oder mehrere Monomereinheiten aus der Gruppe der Vinylester von unverzweigten oder verzweigten Alkylcarbonsäuren mit 1 bis 15 C-Atomen und (Meth)acrylsäureestern;
- Vinylester-Homo- und -Copolymerisate enthaltend eine oder mehrere Monomereinheiten aus der Gruppe der Vinylester von unverzweigten oder verzweigten Alkylcarbonsäuren mit 1 bis 15 C-Atomen, (Meth)acrylsäureestern und Ethen;
- (Meth)acrylsäureester-Homo- oder -Copolymerisate enthaltend eine oder mehrere Monomereinheiten aus der Gruppe der Methacrylsäureester und Acrylsäureester von unverzweigten oder verzweigten Alkoholen mit 1 bis 12 C-Atomen;
- (Meth)acrylsäureester-Homo- oder -Copolymerisate enthaltend eine oder mehrere Monomereinheiten aus der Gruppe der Methacrylsäureester und Acrylsäureester von unverzweigten oder verzweigten Alkoholen mit 1 bis 12 C-Atomen und Styrol;
- Homo- oder Copolymerisate von Fumar- und/oder Maleinsäure-mono- oder diester von unverzweigten oder verzweigten Alkoholen mit 1 bis 12 C-Atome;
- Homo- oder Copolymerisate von Dienen wie Butadien oder Isopren, sowie von Olefinen wie Ethen oder Propen, wobei die Diene beispielsweise mit Styrol, (Meth)acrylsäureestern oder den Estern der Fumar- oder Maleinsäure copolymerisiert werden können;
- Homo- oder Copolymerisate von Vinylaromaten wie Styrol, Methylstyrol, Vinyltoluol;
- Homo- oder Copolymerisate von Vinylhalogenverbindungen wie Vinylchlorid.

Ebenfalls geeignet sind auch wasserunlösliche, filmbildende Polyadditions- und Polykondensationspolymere wie Polyurethane, Polyester, Polyether, Polyamide, Melaminformaldehydharze, Phenolformaldehydharze, gegebenenfalls auch in Form ihrer oligomeren Vorprodukte.

Als Vinylester bevorzugt sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit bis zu 15 C-Atomen, beispielsweise ® VeoVa9, ® VeoVa10 oder ® VeoVa11 der Firma Resolution, Niederlande. Besonders bevorzugt ist Vinylacetat und VeoVa10.

Als Methacrylsäureester oder Acrylsäureester bevorzugt sind Methylacrylat, Methylmethacrylat, Ethylacrylat, Ethylmethacrylat, Propylacrylat, Propylmethacrylat, n-Butylacrylat, t-Butylacrylat, n-Butylmethacrylat, t-Butylmethacrylat, 2-Ethylhexylacrylat. Besonders bevorzugt sind Methylmethacrylat, n-Butylacrylat und 2-Ethylhexylacrylat.

Bevorzugte Estergruppen der Fumar- und Maleinsäure sind Methyl-, Ethyl-, n-Propyl-, iso-Propyl-, n-Butyl-, iso-Butyl-, t-Butyl-, Hexyl-, Ethylhexyl- und Dodecylgruppe.

Die Vinylester-Copolymerisate können 1,0 bis 65 Gew.-%, bezogen auf das Gesamtgewicht der Comonomerphase, α-Olefine wie Ethylen oder Propylen und/oder Vinylaromaten wie Styrol und/oder Vinylhalogenide wie Vinylchlorid und/oder Acrylsäureester bzw. Methacrylsäureester von Alkoholen mit 1 bis 12 C-Atomen, wie Methylacrylat, Methylmethacrylat, Ethylacrylat, Ethylmethacrylat, Propylacrylat, Propylmethacrylat, n-Butylacrylat, t-Butylacrylat, n-Butylmethacrylat, t-Butylmethacrylat, 2-Ethylhexylacrylat und/oder ethylenisch ungesättigte Dicarbonsäuren bzw. deren Derivate wie Diisopropylfumarat, die Dimethyl-, Methyl-t-butyl-, Di-n-butyl-, Di-t-butyl- und Diethylester der Maleinsäure bzw. Fumarsäure, oder Maleinsäureanhydrid enthalten.

Die (Meth)acrylsäureester-Copolymerisate können 1,0 bis 65 Gew.-%, bezogen auf das Gesamtgewicht der Monomerphase, α-Olefine wie Ethylen und Propylen und/oder Vinylaromaten wie Styrol und/oder Vinylhalogenide wie Vinylchlorid und/oder ethylenisch ungesättigte Dicarbonsäuren bzw. deren Derivate wie Diisopropylfumarat, die Dimethyl-, Methyl-t-butyl-, Di-n-butyl-, Di-t-butyl- und Diethylester der Maleinsäure bzw. Fumarsäure, oder Maleinsäureanhydrid enthalten.

In einer weiteren Ausführungsform enthalten die Vinylester-Copolymerisate und (Meth)acrylsäureester-Copolymerisate noch 0,05 bis 10,0 Gew.-%, bezogen auf das Gesamtgewicht des Comonomergemisches, Hilfsmonomere aus der Gruppe der ethylenisch ungesättigten Carbonsäuren, vorzugsweise Acrylsäure oder Methacrylsäure; aus der Gruppe der ethylenisch ungesättigten Carbonsäureamide, vorzugsweise Acrylamid; aus der Gruppe der ethylenisch ungesättigten Sulfonsäuren bzw. deren Salze, vorzugsweise Vinylsulfonsäure und 2-Acrylamido-2-methylpropansulfonsäure (AMPS); und/oder aus der Gruppe der mehrfach ethylenisch ungesättigten Comonomeren, beispielsweise Divinyladipat, Diallylmaleat, Allylmethacrylat oder Triallylcyanurat. Als Hilfsmonomere geeignet sind auch vernetzend wirkende Comonomere, beispielsweise Acrylamidoglykolsäure (AGA), Methacrylamidoglykolsäuremethylester (MAGME), N-Methylolacrylamid (NMAA), N-Methylolmethacrylamid, N-Methylolallylcarbamat, Alkylether, wie der Isobutoxyether, oder Ester des N-Methylolacrylamids, des N-Methylolmethacrylamids oder des N-Methylolallylcarbamats. Entsprechendes gilt für die Copolymerisate der Ester der Malein- oder Fumarsäure.

Die Herstellung der genannten, wasserunlöslichen Polymere erfolgt durch radikalische Polymerisation, vorzugsweise nach dem Emulsionspolymerisationsverfahren. Die Polymerisation kann diskontinuierlich oder kontinuierlich, mit oder ohne Verwendung von Saatlatices, unter Vorlage aller oder einzelner Bestandteile des Reaktionsgemisches, oder nach dem Dosierverfahren ohne Vorlage durchgeführt werden. Alle Dosierungen erfolgen vorzugsweise im Maße des Verbrauchs der jeweiligen Komponente. Die Polymerisation wird vorzugsweise in einem Temperaturbereich von 0 bis 100°C durchgeführt und mit den für die Emulsionspolymerisation üblicherweise eingesetzten Methoden eingeleitet. Die Initiierung erfolgt üblicherweise mittels der üblichen wasserlöslichen Radikalbildner, die vorzugsweise in Mengen von 0,01 bis 3,0 Gew.-%, bezogen auf das Gesamtgewicht der Monomeren, eingesetzt werden. Als Dispergiermittel können alle üblicherweise bei der Emulsionspolymerisation verwendeten Emulgatoren und/oder Schutzkolloide eingesetzt werden.

Gegebenenfalls werden bis zu 6 Gew.-%, bezogen auf das Gesamtgewicht der Monomeren, an Emulgatoren eingesetzt. Als Emulgatoren kommen hierbei sowohl anionische, kationische als auch nichtionische Emulgatoren in Betracht, soweit diese nicht im Schutzkolloid löslich sind.

Vorzugsweise werden Schutzkolloide, besonders bevorzugt in Mengen von bis zu 15 Gew.-%, bezogen auf das Gesamtgewicht der Monomeren, eingesetzt. Beispiele hierfür sind Polyvinylalkohole und deren Derivate wie Vinylalkohol/Vinylacetat-Copolymere, Polyvinylalkohol-Ethen-Copolymerisate, Polyvinylpyrrolidone; Polysaccharide, wie Stärken (Amylose und Amylopektin), Cellulose, Guar, Tragcantinsäure, Dextran, Alginate und deren Carboxymethyl-, Methyl-, Hydroxyethyl-, Hydroxypropyl-Derivate; Proteine wie Casein, Sojaprotein, Gelatine; synthetische Polymere wie Poly(meth)acrylsäure, Poly(meth)acrylamid, Polyvinylsulfonsäuren und deren wasserlöslichen Copolymere; Melaminformaldehydsulfonate, Naphthalinformaldehydsulfonate, Styrol/Maleinsäure- und Vinylether/Maleinsäure-Copolymere. In einer besonders bevorzugten Ausführungsform wird die Polymerisation mit Polyvinylalkohol als Schutzkolloid durchgeführt.

Als Polyhydroxyverbindungen werden definitionsgemäß alle nieder- und makromolekularen organischen Verbindungen, die zwei und mehr Hydroxy-Gruppen im Molekül enthalten (Römpp Lexikon Chemie - Version 2.0, Stuttgart/New York: Georg Thieme Verlag 1999) bezeichnet. Zu den auch Polyole genannten Polyhydroxy-Verbindungen gehören definitionsgemäß mehrwertige Alkohole. Als besonders bevorzugte Polyhydroxykomponente der beanspruchten Carbonsäureester sind Glycerin, Diglycerin und Triglycerin zu nennen.

Die Säurekomponente der erfindungsgemäßen Carbonsäureester enthalten mindestens 6 C-Atome und können gesättigter und ungesättigter Natur sein, sowohl unverzweigt als auch verzweigt. Der Säurerest kann auch Halogene wie Fluor oder Chlor, Ether-, Thioether-, Ester-, Amid-, Carboxyl-, Sulfonsäure-, Carbonsäureanhydrid-, Carbonyl- und Hydroxylgruppen enthalten.

Die beanspruchten Polyhydroxyverbindungen können an jeder Hydroxylgruppe verestert sein, so dass neben den Monoestern auch die Di-, Tri- und Polyester eingesetzt werden können. Bevorzugt eingesetzt werden jedoch die Mono-, Di- und Triester.

Zur Verbesserung der Wasserlöslichkeit können die beanspruchten Carbonsäureester Polyethylenoxideinheiten als Spacer zwischen Carbonsäure- und Alkoholkomponente enthalten. Die Anzahl der Polyethylenoxideinheiten liegt im allgemeinen zwischen 1 und 80, bevorzugt zwischen 2 und 40.

Im Fall einer genügenden Wasserlöslichkeit werden die Polyhydroxycarbonsäureester bevorzugt als Reinsubstanz zum Emulsionspolymerisat zugegeben. Andernfalls werden die Carbonsäureester in Form einer Emulsion zugegeben. Zur Emulgierung verwendet man vorzugsweise die weiter unten aufgeführten Schutzkolloide, gegebenenfalls in Kombination mit geeigneten Emulgatoren. Als Emulgatoren kommen hierbei sowohl anionische, kationische als auch nichtionische Emulgatoren in Betracht.

Weiterhin bevorzugt ist die Zugabe der Carbonsäureester zur wässrigen Phase der Emulsionspolymerisation. Des weiteren können die beanspruchten Carbonsäureester während der Emulsionspolymerisation zudosiert werden.

In einer weiteren Ausführungsform werden die Carbonsäureester auf einen festen Träger aufgebracht, wie dies in der DE-A 195 35 833 und der DE-A 197 52 659 ausführlich beschrieben ist. Bei diesen Trägern handelt es sich dabei um die unten aufgeführten Antibackmittel, sowie Magnesiumhydrosilicate, feinteiliges Titandioxid, Tonerden, Bleicherden, aktiviertes Aluminiumoxid, Vermiculite wie Betonit, expandiertes Perlit, sowie Phosphate wie Na-Phosphat. Besonders bevorzugt sind Kieselsäuren mit einer BET-Oberfläche von mindestens 50 m²/g, insbesondere von mindestens 100 m²/g. Die Menge an zugesetztem Carbonsäureester beträgt zwischen 10 und 160 Gew.-%, bezogen auf das Gewicht des eingesetzten Trägermaterials.

Diese gecoateten Produkte werden entweder als Antibackmittel eingesetzt und während des Versprühprozesses zugemischt oder zum fertigen Dispersionspulver direkt zugegeben.

In einer bevorzugten Ausführungsform enthält die Dispersionspulver-Zusammensetzung 3 bis 30 Gew.-%, vorzugsweise 3 bis 15 Gew.-% Schutzkolloid, bezogen auf die Gesamtmenge an wasserunlöslichem Polymerisat. Geeignete Schutzkolloide sind beispielsweise Polyvinylalkohole und deren Derivate wie Vinylalkohol/Vinylacetat-Copolymere, Polyvinylalkohol/Ethen-Copolymerisate, Polyvinylpyrrolidone; Polysaccharide, wie Stärken (Amylose und Amylopektin), Cellulose, Guar, Tragcantinsäure, Dextran, Alginate und Carboxymethyl-, Methyl-, Hydroxyethyl-, Hydroxypropyl-Derivate; Proteine wie Casein, Sojaprotein, Gelatine; synthetische Polymere wie Poly(meth)acrylsäure, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere.

Geeignete Antibackmittel sind vorzugsweise Aluminiumsilikate, Calcium- und Magnesiumcarbonate bzw. deren Gemische, Kieselsäuren oder Kombinationen von Dolomit bzw. Calcit und Talk. Die Antibackmittel besitzen vorzugsweise eine Korngröße von 0,001 bis 0,5 mm.

Die Herstellung der Dispersionspulverzusammensetzung erfolgt über Sprühtrocknung. Die Trocknung erfolgt dabei in üblichen Sprühtrocknungsanlagen, wobei die Zerstäubung mittels Ein-, Zwei-, oder Mehrstoffdüsen oder mit einer rotierenden Scheibe erfolgen kann. Die Austrittstemperatur wird im allgemeinen im Bereich von 50 bis 100 °C, vorzugsweise 60 bis 90 °C, je nach Anlage, Glastemperatur des Polymerisats und gewünschtem Trocknungsgrad, gewählt. Zur Erhöhung der Lagerstabilität und der Rieselfähigkeit des Dispersionspulvers wird vorzugsweise ein Antibackmittel parallel zur Dispersion in den Sprühturm eingebracht, so dass es zu einer bevorzugten Ablagerung des Antibackmittels auf den Dispersionsteilchen kommt.

Die Dispersionspulver-Zusammensetzung kann in den typischen Anwendungsgebieten eingesetzt werden. Beispielsweise in bauchemischen Produkten in Verbindung mit anorganischen, hydraulisch abbindenden Bindemitteln wie Zementen (Portland-, Aluminat-, Trass-, Hüllen-, Magnesia-, Phosphatzement), Gips, Wasserglas, für die Herstellung von Bauklebern, Putzen, Spachtelmassen, Fußbodenspachtelmassen, Fugenmörtel und Farben. Ferner als Alleinbindemittel für Beschichtungsmittel und Klebemittel oder als Bindemittel für Textilien. Vorzugsweise wird die Dispersionspulverzusammensetzung als hydrophobierendes Bindemittel in Anwendungsgebieten eingesetzt, in denen neben einer guten Haftung auch eine reduzierte Wasseraufnahme und/oder wasserabweisender Effekt erwünscht ist.

### Beispiele

Die in den Beispielen angeführten Teile und Prozentangaben beziehen sich auf das Gewicht, soweit nicht anders vermerkt.

### Beispiele 1 bis 6:

1300 Teile einer mit Polyvinylalkohol stabilisierten Dispersion auf Basis Vinylacetat, Versaticsäure-10-vinylester und Butylacrylat (45:45:10),
- Feststoffgehalt: 54,1 %;
- Viskosität (Haake VT 500, 386.6 s⁻¹): 1150 mPa^{·}s;
- T_{g}: 13 °C, gemessen durch Differential Scanning Calometry (DSC) mit einer Aufheizgeschwindigkeit von 10 K/min;
- Partikelgrößenverteilung: d_{w}: 1863 nm, d_{w}/dₙ: 12,8;
wurden mit 140 Teilen einer 25 %igen Polyvinylalkohollösung (Viskosität der 4 %-igen wässrigen Lösung bei 20°C: 4 mPa^{·}s, Verseifungsgrad: 88 %, Polymerisationsgrad: 630) versetzt.

Zu der Mischung wurden jeweils 3 Teile der nachfolgenden Hydrophobierungsmittel gegeben:

| Beispiel Nr. | Hydrophobierungsmittel |
|---|---|
| 1 (Vergleich) | Sorbitanmonolaurat |
| 2 | Glycerinmonolaurat |
| 3 | Glycerinmonostearat |
| 4 | Triglycerindiisostearat |
| 5 | Diglycerindiisostearat |
| 6 | Glycerintriacetoxystearat |

Die Abmischungen wurden mit entionisiertem Wasser auf einen Feststoffgehalt von 40 % verdünnt und unter Zugabe eines Antibackmittelgemisches aus Talk und Dolomit sprühgetrocknet (Sprühtrockner der Fa. Niro, Eingangstemperatur: 130°C, Ausgangstemperatur: 65°C, Durchsatz: 1 kg Dispersion/Stunde). Der Antibackmittelgehalt betrug 15 %.

Die isolierten Dispersionspulver 1 bis 6 wurden in hydraulisch abbindenden Massen eingesetzt und die Wasseraufnahmen wie folgt bestimmt.

Erst wurde ein pulverförmiger, mineralischer Deckputz hergestellt aus

| | |
|---|---|
| 300 Teile | Portlandzement (weiß) CEM l 42.5 R |
| 2 Teile | ® Tylose MH 10007 P4 |
| 240 Teile | Kalksteinmehl < 0,1 mm |
| 780 Teile | Kalksandstein 0,1 bis 0,7 mm |
| 598 Teile | Kalksandstein 0,7 bis 1,25 mm |
| 60 Teile | Weißkalkhydrat |
| 20 Teile | Dispersionspulver. |

Die Bestandteile des mineralischen Deckputzes wurden in einem Mischer der Fa. Lödige (Typ M5R) 3 Minuten bei 8,5 Skalenteilen homogenisiert.
200 Teile des pulverförmigen, mineralischen Deckputzes wurden nach Zugabe von 48 Teilen Wasser 15 Sekunden unter einem Lenartrührer (Fa. Vollrath, Typ EWTHV-1) mit hoher Umdrehungszahl gerührt. Man ließ die Masse 5 Minuten reifen, dann wurde nochmals per Hand durchgerührt.

Auf eine 2 cm dicke EPS-Platte (expandiertes Polystyrol) wurde eine Schablone mit den Abmessungen 0,5 x 10 x 20 cm gelegt. Die Masse wurde gleichmäßig eingefüllt und glattgezogen.

Man ließ über Nacht stehen, dann wurden die Probekörper ausgeschnitten und der Rand mit geschmolzenem Paraffin abgedichtet.

Die abgedichteten Probekörper wurden bei einer Temperatur von 23 °C zunächst 3 Tage bei gesättigter Wasserdampfatmosphäre und anschließend 3 Tage bei 50 % rel. Luftfeuchte gelagert.

Danach wurden die Probekörper gewogen und anschließend mit der Prüffläche nach unten in ein mit Wasser gefülltes Becken gelegt. Nach 4 bzw. 24 h wurden die Probekörper herausgenommen, mit einem Schwammtuch trockengetupft und gewogen. Die Massenzunahme wurde auf g/m² umgerechnet.

Die Wasseraufnahmen der unter Einsatz der Dispersionspulver 1 bis 6 formulierten Deckputze sind in der nachfolgenden Tabelle zusammengestellt:

| Beispiel Nr. | Wasseraufnahme 4 Std. (g/m²) | Wasseraufnahme 24 Std. (g/m²) |
|---|---|---|
| 1 (Vergleich) | 875 | 1020 |
| 2 | 255 | 380 |
| 3 | 845 | 975 |
| 4 | 355 | 505 |
| 5 | 445 | 620 |
| 6 | 535 | 645 |

## Patentansprüche

1. Dispersionspulver-Zusammensetzung auf Basis von wasserunlöslichen Polymerisaten, **dadurch gekennzeichnet, dass** sie, bezogen auf die Gesamtmasse des Polymerisats, eine Menge im Bereich von 0,1 bis 30 Gew.-% mindestens eines Carbonsäureesters enthält, dessen Säurekomponente mindestens 6 C-Atome besitzt und dessen Alkoholkomponente eine Polyhydroxyverbindung ist.

2. Dispersionspulver-Zusammensetzung gemäß Anspruch 1, **dadurch gekennzeichnet, dass** die Alkoholkomponente ausgewählt ist aus der Gruppe Glycerin, Diglycerin und Triglycerin.

3. Dispersionspulver-Zusammensetzung gemäß Anspruch 1 oder 2, **dadurch gekennzeichnet, dass** sie mindestens ein wasserunlösliches Polymerisat ausgewählt aus der Gruppe
der Vinylester-, Vinylester/Ethylen-, Vinylester/(Meth)acrylsäureester-,
Vinylester/(Meth)acrylsäureester/Ethylen-,
der (Meth)acrylsäureester-, Styrol/(Meth)acrylsäureester-,
der Fumarsäureester-, Maleinsäureester- Homo- und Copolymerisate,
der Homo- und Copolymerisate von Vinylhalogeniden, Vinylaromaten, Dienen, Olefinen,
der Polyurethane, Polyester, Polyether, Polyamide, Melaminformaldehydharze, Phenolformaldehydharze oder ihrer oligomeren Vorprodukte,
enthalten.

4. Dispersionspulver-Zusammensetzung gemäß einem oder mehreren der Ansprüche 1 bis 3, **dadurch gekennzeichnet, dass** das Polymerisat mittels Schutzkolloiden und/oder Emulgatoren stabilisiert ist.

5. Dispersionspulver-Zusammensetzung gemäß einem oder mehreren der Ansprüche 1 bis 4, **dadurch gekennzeichnet, dass** das Polymerisat 3 bis 35 Gew.-% eines Schutzkolloids, bezogen auf die Gesamtmasse des Polymerisats, enthält.

6. Dispersionspulver-Zusammensetzung gemäß einem oder mehreren der Ansprüche 1 bis 4, **dadurch gekennzeichnet, dass** das Polymerisat 0 bis 30 Gew.-% Antibackmittel, bezogen auf die Gesamtmasse des Polymerisats, enthält.

7. Dispersionspulver-Zusammensetzung gemäß einem der Ansprüche 1 bis 6, **dadurch gekennzeichnet, dass** sie
a) mindestens ein wasserunlösliches Polymerisat aus der Gruppe der Vinylester-, Vinylester/Ethylen, Vinylchlorid, (Meth)acrylat-, Styrol/Acrylat-Homo- und Copolymerisate;
b) 3 bis 35 Gew.-%, bezogen auf die Gesamtmasse des Polymerisats, eines Schutzkolloids;
c) 0,1 bis 30 Gew.-% bezogen auf die Gesamtmasse des Polymerisats, mindestens eines Carbonsäureesters, dessen Säurekomponente mindestens 6 C-Atome besitzt und dessen Alkoholkomponente Glycerin, Diglycerin oder Triglycerin ist, und der zwischen Säure- und Alkoholkomponente zwischen 0 und 80 Polyethylenoxideinheiten aufweist; und
d) 0 bis 30 Gew.-%, bezogen auf die Gesamtmasse des Polymerisats, Antibackmittel, enthält.

8. Dispersionspulver-Zusammensetzung gemäß einem oder mehreren der Ansprüche 1 bis 7, **dadurch gekennzeichnet, dass** zur Herstellung des Polymerisats als Schutzkolloid Polyvinylalkohol mit einem Polymerisationsgrad von 200 bis 3500 und einem Hydrolysegrad von 80 bis 98 Mol-% eingesetzt wird.

9. Dispersionspulver-Zusammensetzung gemäß einem oder mehreren der Ansprüche 1 bis 8, **dadurch gekennzeichnet, dass** die Säurekomponente Halogene, Hydroxyl-, Ether-, Thioether-, Ester-, Amid-, Carboxyl-, Sulfonsäure-, Carbonsäureanhydrid- und/oder Carbonylgruppen enthalten.

10. Dispersionspulver-Zusammensetzung gemäß einem oder mehreren der Ansprüche 1 bis 9, **dadurch gekennzeichnet, dass** als Carbonsäureester die entsprechenden Mono-, Di-, und Triester des Glycerins, Diglycerins oder Triglycerins eingesetzt werden.

11. Dispersionspulver-Zusammensetzung gemäß einem oder mehreren der Ansprüche 1 bis 10, **dadurch gekennzeichnet, dass** als Antibackmittel Aluminiumsilikate, Calcium- und Magnesiumcarbonate bzw. deren Gemische, Kieselsäuren und Kombinationen von Dolomit bzw. Calcit und Talk eingesetzt werden.

12. Dispersionspulver-Zusammensetzung gemäß einem oder mehreren der Ansprüche 1 bis 11, **dadurch gekennzeichnet, dass** der Carbonsäureester auf ein pulverförmiges Trägermaterial aufgebracht ist, und dass das Trägermaterial eine Menge im Bereich von 10 bis 160 Gew.-% Carbonsäureester, bezogen auf das Eigengewicht des Trägermaterials, enthält.

13. Dispersionspulver-Zusammensetzung nach Anspruch 12, **dadurch gekennzeichnet, dass** das pulverförmige Trägermaterial ein Antibackmittel gemäß Anspruch 11 ist.

14. Dispersionspulver-Zusammensetzung gemäß Anspruch 12, **dadurch gekennzeichnet, dass** das Trägermaterial pyrogen hergestellte Kieselsäure oder gefällte Kieselsäure mit einer BET-Oberfläche von mindestens 50m²/g ist.

15. Verfahren zum Herstellen einer Dispersionspulver-Zusammensetzung gemäß einem oder mehreren der Ansprüche 1 bis 14, bei dem man durch Mischen von Polymerisat a), Schutzkolloid b) mit dem Carbonsäureester c) und optional weiterem Schutzkolloid b) eine Dispersion herstellt und diese anschließend gegebenenfalls unter gleichzeitigem Zumischen eines Antibackmittels d) trocknet.

16. Verfahren gemäß Anspruch 15, **dadurch gekennzeichnet, dass** der Carbonsäureester bereits in die Vorlage des zur Herstellung benötigten Polymerisats a) gegeben wird.

17. Verfahren gemäß Anspruch 16, **dadurch gekennzeichnet, dass** man den Carbonsäureester auf ein Trägermaterial aufbringt und dass man dieses beschichtete Material während und/oder nach der Trocknung der Dispersionspulver-Zusammensetzung zugibt.

18. Verfahren gemäß Anspruch 17, **dadurch gekennzeichnet, dass** man das beschichtete Trägermaterial nach der Trocknung der Dispersionspulver-Zusammensetzung zugibt.

19. Verfahren gemäß Anspruch 15 bis 18, **dadurch gekennzeichnet, dass** das Trocknen durch Sprühtrocknen in einem Trockenturm erfolgt.

20. Verwendung des Dispersionspulver-Zusammensetzung gemäß einem oder mehreren der Ansprüche 1 bis 14 zur Modifizierung von Tapetenkleister, Mörtel oder Beton.

21. Verwendung einer Dispersionspulver-Zusammensetzung auf der Basis von wasserunlöslichen Polymerisaten, die, bezogen auf die Gesamtmasse des Polymerisats, eine Menge im Bereich von 0,1 bis 30 Gew.-% mindestens eines Carbonsäureesters enthält, dessen Säurekomponente mindestens 6 C-Atome besitzt und dessen Alkoholkomponente Glycerin, Diglycerin oder Triglycerin ist, zur Hydrophobierung von Mörtel oder Beton.
